# EUROPEAN PATENT APPLICATION

(11) **EP 1 860 361 A1**
(43) Date of publication of application: **28.11.2007**
(21) Application number: 06729023.9
(22) Date of filing: 14.03.2006
(51) Int. Cl.: F16K 49/00, F16K 27/00

(54) **FLUID CONTROL DEVICE**

(30) Priority: 22.03.2005 JP 2005080822
(71) Applicant: FUJIKIN INCORPORATED, Osaka-shi, Osaka 550-0012 (JP)
(72) Inventor: SHIKATA, Izuru, Nishi-ku, Osaka-shi, Osaka, 5500012 (JP)
(74) Representative: Paul, Dieter-Alfred
(86) International application number: PCT/JP2006/304970
(87) International publication number: WO 2006/100960

(57) **Abstract**

There is provided a fluid controlling apparatus which can satisfactorily perform heating without enlarging an installation area.

Heating means 3 comprises: a planar heater 21 interposed between a base member 2 and a lower layer 5; and heat conduction enhancing spacers 22 interposed between interrupting releasers 15 and 17 disposed on an upper layer 4 and a mass flow controller 16, and the heater 21, respectively.

## Description

### TECHNICAL FIELD

The present invention relates to a fluid controlling apparatus for use in a semiconductor fabricating apparatus or the like and, more particularly, to a fluid controlling apparatus capable of performing heating.

### BACKGROUND ART

Patent Literature 1 discloses, as heating means for a fluid controlling apparatus, a device for heating a fluid controlling apparatus which includes a plurality of fluid controlling devices lengthwise arranged in series to be fixed to a base member, the heating device comprising a tape heater disposed on at least either one of right and left sides of the fluid controlling apparatus and a plurality of brackets, each having a bottom wall secured to the base member via a screw and a side wall which allows the tape heater to abut against each of the fluid controlling devices.

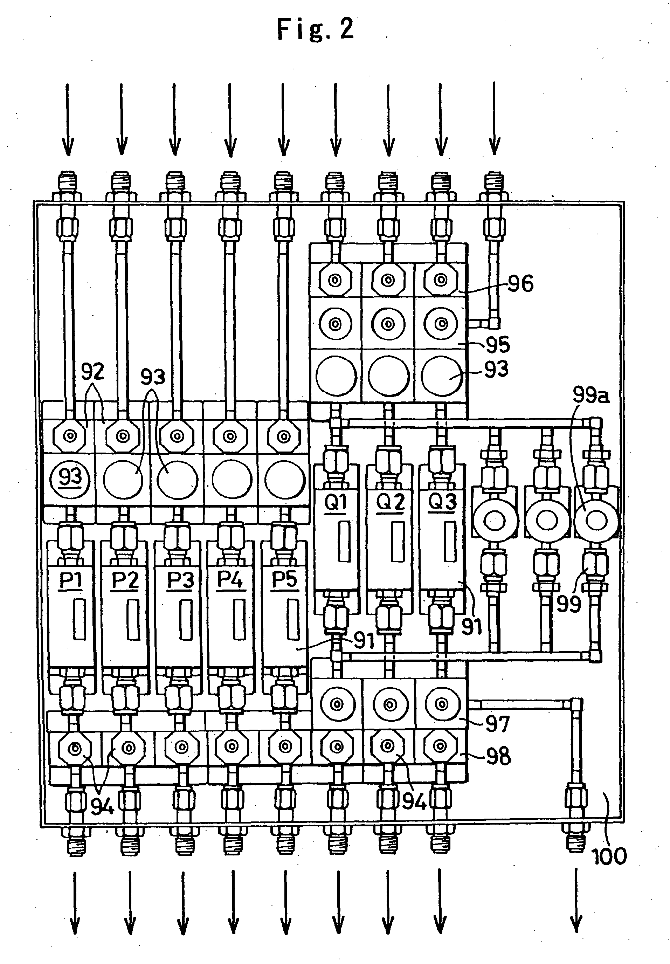

In the meantime, the compact integration of a plurality of lines on a single base member progresses in a fluid controlling apparatus for use in a semiconductor fabricating apparatus. As shown in, for example, Fig. 2 such a fluid-controlling apparatus comprises a plurality of lines (P1), (P2), (P3), (P4) and (P5) without any bypass passage and a plurality of lines (Q1), (Q2) and (Q3), each having a bypass passage. Each of the lines (P1), (P2), (P3), (P4) and (P5) without any bypass passage includes a mass flow controller (91), a switch valve (92) disposed on an inlet side via a filter (93), and another switch valve (94) disposed on an outlet side. In contrast, each of the lines (Q1), (Q2) and (Q3), each having the bypass passage, includes a mass flow controller (91), two switch valves (95) and (96) disposed on an inlet side via a filter (93), two switch valves (97) and (98) disposed on an outlet side, and a bypass pipeline (99) with a switch valve (99a) which connects a connector on the inlet side and a connector on the outlet side to each other in the mass flow controller (91). The fluid controlling apparatus is assembled such that a block-like coupling member (not shown) serving as a lower layer is first screwed to a base member (100), and then, that the fluid controlling devices (91), (92), (93), (94), (95), (96), (97) and (98) such as the mass flow controller, the filter and the switch valve constituting an upper layer are fixed astride the coupling member.

In the above-described heating device for the fluid controlling apparatus disclosed in Patent Literature 1, a tape heater can be disposed along the fluid controlling devices even if the fluid controlling apparatus has unevenness at its side surface, as viewed on plan, thereby producing an advantage of uniformly heating the fluid controlling devices without any adverse influence of the unevenness. However, the base member must have a portion, to which a bottom wall of a bracket is fixed, and therefore, it is necessary to enlarge an installation area for the base member, that is, the fluid controlling apparatus in using the heater. In contrast, the enlargement of the installation area is not preferable from the viewpoint of the integration of the fluid controlling apparatus, thereby raising a problem of excessive suppression of the enlargement of the installation area due to the installation of the heating device. In addition, an interval between the lines is small in the integrated fluid controlling apparatus, thereby raising another problem of a cumbersome work for positionally adjusting the bracket and screwing the bracket in the base member in the heating device disclosed in Patent Literature 1.

In view of this, Patent Literature 2 discloses a fluid controlling apparatus, in which lines, each including an upper layer having a plurality of fluid controlling devices and a lower layer having a plurality of block-like coupling members, are arranged in parallel on a base member, wherein right and left tape heaters are arranged on both sides of at least one line, to be held in corresponding coupling members via a plurality of clips, respectively.
Patent Literature 1: Japanese Patent Application Laid-open No. Hei 10-246356
Patent Literature 2: Japanese Patent Application Laid-open No. 2003-021262

### DISCLOSURE OF THE INVENTION

### PROBLEMS TO BE SOLVED BY THE INVENTION

The problems experienced by the fluid controlling apparatus disclosed in Patent Literature 1 can be remarkably solved in the fluid controlling apparatus disclosed in Patent Literature 2. However, with the configuration of the fluid controlling apparatus which is heated sideways, there remains the problem of insufficient suppression of the enlargement of the installation area.

An object of the present invention is to provide a fluid controlling apparatus which can satisfactorily perform heating without enlarging an installation area.

### MEANS FOR SOLVING THE PROBLEMS

A fluid controlling apparatus according to the present invention comprises: lines arranged in parallel on a base member, each of the lines including an upper layer having a plurality of fluid controlling devices and a lower layer having a plurality of block-like coupling members; and heating means for heating the coupling member and the fluid controlling device, the heating means including a planar heater interposed between the base member and the lower layer and at least one heat conduction enhancing spacer interposed between at least one of the fluid controlling devices on the upper layer and the heater.

The upper layer of each of the lines is basically configured such that switch valves are disposed on both sides of a mass flow controller, and may be added with various kinds of fluid controlling devices such as a filter and a regulator, as required.

The lower layer of each of the lines is constituted of, for example, block-like coupling members with pipe connectors disposed at an inlet and an outlet, respectively, and a plurality of block-like coupling members with V-shaped passages for allowing the adjacent fluid controlling devices to communicate with each other. Here, all of the block-like coupling members with the V-shaped passages should be preferably formed into the same shape.

The heater is formed in substantially the same width and length as those of one of the lines, and may be disposed only on a line which need be heated or may be disposed over substantially the entire surface of the base member. The temperature of the heater is controlled based on, for example, a voltage ON-OFF control by a temperature controller. A platinum thin film temperature sensor, a sheath K type thermo couple or the like is used as a temperature-controlling sensor. Although the heater is exemplified by, for example, a ceramic heater, it is not limited to the ceramic heater.

The heat conduction enhancing spacer is made of metal such as stainless steel or aluminum, and further, is formed into a block having substantially the same length and width as those of the block-like coupling member. The fluid controlling devices are different in length in accordance with their properties. Therefore, the heat conduction enhancing spacer is disposed in the relatively long fluid controlling device.

For example, the upper layer may include an interrupting releaser having a block-like main body and two switch valve actuators fixed to the main body, the interrupting releaser being supported at each of ends at the lower surface of the main body by the coupling member, and further, the heat conduction enhancing spacer may be interposed between the lower surface of the main body and the heater. Alternatively, the upper layer may include a mass flow controller having a main body and passage blocks on the inlet and outlet sides in a manner projecting forward and rearward of the main body, the mass flow controller being supported at a lower surface of each of the passage blocks by the coupling member, and further, the heat conduction enhancing spacer may be interposed between the lower surface of the main body and the heater. In the former, the number of component parts can be reduced in comparison with a fluid controlling apparatus in which a main body is provided in each of switch valves: in contrast, in the latter, it is possible to efficiently heat even a mass flow controller, which is liable to be decreased in heating efficiency since it is relatively long. In either case, the block-like coupling member constituting the lower layer can be formed into the same shape as the case without any heating means, thus suppressing an increase in cost caused by the addition of the heating means since the spacer requiring no passage only is additionally disposed without increasing the kinds of coupling members requiring a passage.

### EFFECTS OF THE INVENTION

In the fluid controlling apparatus according to the present invention, the heater interposed between the base member and the lower layer performs heating, thus making it unnecessary to provide any heating configuration sideways of the line, and further, performing heating without enlarging an installation area. Moreover, the interposition of the spacer between the fluid controlling device and the heater can perform heating without degrading the heating efficiency even in the case where there is provided a fluid controlling device having a great length in a longitudinal direction of a line.

### BRIEF DESCRIPTION OF THE DRAWINGS

FIG. 1 is a vertical cross-sectional view showing fluid controlling devices in one preferred embodiment according to the present invention.
FIG. 2 is a plan view showing a conventional controlling device.

### EXPLANATION OF REFERENCE NUMERALS

- (1): line
- (2): base member
- (3): heating means
- (4): upper layer
- (5): lower layer
- (10), (11), (12), (13), (14) fluid controlling device (15), (17): interrupting releaser (fluid controlling device)
- (16): mass flow controller (fluid controlling device)
- (18), (19), (20): block-like coupling member
- (21): planar heater
- (22): heat conduction enhancing spacer
- (23), (27): main body
- (24), (25), (28),: (29) switch valve actuator
- (31): main body
- (32): passage block

### BEST MODE FOR CARRYING OUT THE INVENTION

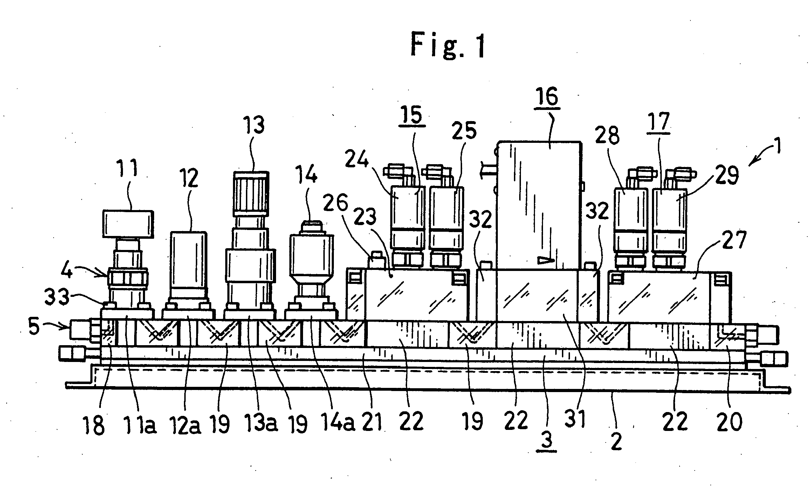

A preferred embodiment according to the present invention will be described below in reference to the drawing. In the description below, a vertical direction in FIG. 1 is referred to as a vertical direction, and further, right and left in FIG. 1 are referred to as front and back, respectively. The lateral and vertical directions are for convenience sake, and therefore, the front and back may be reverse or the vertical direction may be the lateral direction.

A fluid controlling apparatus according to the present invention is configured by arranging a plurality of lines (1) whose inlets and outlets are oriented in the same directions, respectively, in parallel on a base member (2). At least one of the plurality of lines (1) includes heating means (3).

The line (1) shown in FIG. 1 includes an upper layer (4) having a plurality of fluid controlling devices (11), (12), (13), (14), (15), (16) and (17) and a lower layer (5) having a plurality of block-like coupling members (18), (19) and (20).

The heating means (3) includes a planar heater (21), which is interposed between the base member (2) and the lower layer (5) on at least one of the lines (1) so as to heat the fluid controlling devices (11), (12), (13), (14), (15), (16) and (17) and the coupling members (18), (19) and (20), and at least one (three in the present preferred embodiment) metallic heat conduction enhancing spacers (22), which are interposed between at least one of the fluid controlling devices (15), (16) and (17) on the upper layer (4) and the heater (21).

The upper layer (4) includes: a mass flow controller (16); a manual valve (11), a filter (12), a regulator (13), a pressure gage (14) and an interrupting releaser (15), which are disposed rearward (i.e., on an inlet side) of the mass flow controller (16); and another interrupting releaser (17), which is disposed forward (i.e., on an outlet side) of the mass flow controller (16).

The lower layer (5) includes the block-like coupling members (18) and (20) with a pipe connector, which are disposed at an inlet and an outlet, respectively, and the plurality of block-like coupling members (19) with a V-shaped passage, which allow the adjacent fluid controlling devices (11), (12), (13), (14), (15), (16) and (17) to communicate with each other. All of the plurality of block-like coupling members (19) with a V-shaped passage are formed into the same shape.

At the manual valve (11), the filter (12), the regulator (13) and the pressure gage (14) are respectively disposed main bodies (11a), (12a), (13a) and (14a), each having a passage (not shown) opened at the lower end thereof.

The interrupting releaser (15) on the inlet side includes a block-like main body (23), two switch actuators (24) and (25) fixed to the main body (23), and a tubular connector (26) mounted at the upper surface of the main body (23). The switch valve actuator (24) disposed rearward is a three-port valve: in contrast, the switch valve actuator (25) disposed forward is a two-port valve. In the meantime, the interrupting releaser (17) on the outlet side includes a block-like main body (27), and two switch valve actuators (28) and (29) fixed to the main body (27). The interrupting releasers (15) and (17) are supported at respective fore and rear ends of the lower surfaces of the main bodies (23) and (27) by the corresponding block-like coupling members (19) with a V-shaped passage, respectively.

The mass flow controller (16) includes a main body (31) and passage blocks (32) on the inlet and outlet sides in a manner projecting forward and rearward of the main body (31), wherein the passage blocks (32) are supported at the lower surfaces thereof by the corresponding block-like coupling members (19) with a V-shaped passage, respectively.

The upper surface of the lower layer (5) is flush with the lower surface of the upper layer (4). Onto the base member (2) are secured at predetermined intervals the coupling members (18), (19) and (20) serving as the constituent elements on the lower layer. The fluid controlling devices (11), (12), (13), (14), (15), (16) and (17) serving as the constituent elements on the upper layer are disposed astride the lengthwise adjacent coupling members (18), (19) and (20), and then, are fixed to the corresponding coupling members (18), (19) and (20) via screw members (33), respectively. Thus, it is possible to assemble the fluid controlling apparatus having secure sealability.

The heat conduction enhancing spacers (22) are interposed between the lower surface of the main body (23) of the interrupting releaser (15) on the inlet side and the heater (21), between the lower surface of the main body (27) of the interrupting releaser (17) on the outlet side and the heater (21), and between the lower surface of the main body (31) of the mass flow controller (16) and the heater (21), respectively. The heat conduction enhancing spacer (22) is formed into a block having the same height and width as those of each of the block-like coupling members (18), (19) and (20) so as to form the lower layer, wherein the length corresponds to the length of each of the interrupting releaser (15) on the inlet side, the interrupting releaser (17) on the outlet side, and the mass flow controller (16).

In the present preferred embodiment, the three heat conduction enhancing spacers (22) have the same length. As a consequence, an additional part other than the planar heater (21) is only one kind of heat conduction enhancing spacer (22), and further, an installation area is not increased at all with respect to the fluid controlling apparatus which need not be heated, thus achieving the fluid controlling apparatus with the heating means (3). Incidentally, since the heat conduction enhancing spacer (22) has a simple shape, two or more kinds of heat conduction enhancing spacers may be additionally disposed. The present preferred embodiment shown in FIG. 1 is merely an example, and therefore, the heating means (3) can be used on lines having various,configurations.

### INDUSTRIAL APPLICABILITY

The fluid controlling apparatus according to the present invention can satisfactorily perform heating without enlarging the installation area, so as to be applied to the fluid controlling apparatus for use in a semiconductor fabricating apparatus or the like, thus contributing to the enhancement of the performance of the semiconductor fabricating apparatus or the like.

## Claims

1. A fluid controlling apparatus comprising: lines arranged in parallel on a base member, each of the lines including an upper layer having a plurality of fluid controlling devices and a lower layer having a plurality of block-like coupling members; and heating means for heating the coupling member and the fluid controlling device, the heating means including a planar heater interposed between the base member and the lower layer and at least one heat conduction enhancing spacer interposed between at least one of the fluid controlling devices on the upper layer and the heater.

2. The fluid controlling apparatus according to claim 1, wherein the upper layer includes an interrupting releaser having a block-like main body and two switch valve actuators fixed to the main body, the interrupting releaser being supported at each of ends at the lower surface of the main body by the coupling member, and further, the heat conduction enhancing spacer is interposed between the lower surface of the main body and the heater.

3. The fluid controlling apparatus according to claim 1, wherein the upper layer includes a mass flow controller having a main body and passage blocks on the inlet and outlet sides in a manner projecting forward and rearward of the main body, the mass flow controller being supported at a lower surface of each of the passage blocks by the coupling member, and further, the heat conduction enhancing spacer is interposed between the lower surface of the main body and the heater.
